# EUROPÄISCHE PATENTANMELDUNG

(11) **EP 4 265 467 A1**
(43) Veröffentlichungstag der Anmeldung: **25.10.2023**
(21) Anmeldenummer: 23168343.4
(22) Anmeldetag: 17.04.2023
(51) Int. Cl.: B60L 53/10, B60L 53/14, B60L 53/30, B60L 53/62, H02H 7/125

(54) **DC-VERSORGUNGSSTATION UND BETRIEBSVERFAHREN HIERFÜR**

(30) Priorität: 20.04.2022 DE 102022109522
(71) Anmelder: Compleo Charging Solutions AG, 44309 Dortmund (DE)
(72) Erfinder: Turki, Faical, 59174 Kamen (DE); Paloja, Imer, 42283 Wuppertal (DE); Wohlfahrt, Thomas, 45721 Haltern am See (DE)
(74) Vertreter: Wickord, Wiro

(57) **Zusammenfassung**

Die Erfindung betrifft eine DC-Versorgungsstation (10) umfassend eine Leistungselektronikbaugruppe (12) mit einem Gleichstromsteller (13), wobei der Gleichstromsteller mindestens ein schaltbares Halbleiterbauelement vorsieht und eingangsseitig an ein Versorgungsnetz angeschlossen ist, umfassend einen ersten und einen zweiten Anschlusskontakt, wobei über die Anschlusskontakte bei einer Leistungsabgabe an ein elektrisch betreibbares Fahrzeug (30) ein Ausgangsstrom bereitstellbar ist, umfassend einen ersten und einen zweiten Versorgungsleiter (DC+, DC-), wobei die Versorgungsleiter den Gleichstromsteller ausgangsseitig mit den Anschlusskontakten verbinden, und umfassend einen Ausgangskondensator (15), wobei die Versorgungsleiter über den Ausgangskondensator miteinander verbunden sind, wobei die Leistungselektronikbaugruppe eine Detektorschaltung (14) aufweist, welche eingerichtet ist zur Erkennung eines Lastabwurfs und als Hardwareschaltung realisiert ist, wobei der Detektorschaltung eingangsseitig ein Messignal für den Ausgangsstrom bereitgestellt ist und ausgangseitig eine Schaltleitung (18) zu dem Gleichstromsteller geführt ist und wobei im Fall des Lastabwurfs über die Schaltleitung ein Abschaltsignal für das mindestens eine schaltbare Halbleiterbauelement des Gleichstromstellers bereitgestellt und die Leistungsabgabe unterbrochen wird. Ferner betrifft die Erfindung ein Betriebsverfahren für eine DC-Versorgungsstation (10).

## Beschreibung

Die Erfindung betrifft eine DC-Versorgungsstation für ein elektrisch betreibbares Fahrzeug umfassend eine Leistungselektronikbaugruppe mit einem Gleichstromsteller, wobei der Gleichstromsteller mindestens ein schaltbares Halbleiterbauelement vorsieht und eingangsseitig an ein Versorgungsnetz angeschlossen ist, umfassend einen ersten Anschlusskontakt und einen zweiten Anschlusskontakt, wobei die Anschlusskontakte als Komponenten eines Fahrzeuganschlusses dem Anschluss des elektrisch betreibbaren Fahrzeugs an die DC-Versorgungsstation dienen und über die Anschlusskontakte bei einer Leistungsabgabe an das elektrisch betreibbare Fahrzeug ein Ausgangsstrom bereitstellbar ist, umfassend einen ersten Versorgungsleiter und einen zweiten Versorgungsleiter, wobei die Versorgungsleiter den Gleichstromsteller ausgangsseitig mit den Anschlusskontakten verbinden, und umfassend einen Ausgangskondensator, wobei die Versorgungsleiter über den Ausgangskondensator miteinander verbunden sind.

Ferner betrifft die Erfindung ein Betriebsverfahren für eine derartige DC-Versorgungsstation.

Der Bereitstellung elektrischer Energie für elektrisch betreibbare Fahrzeuge dienende Versorgungsstationen im Allgemeinen und DC-Versorgungsstationen im Speziellen unterliegen hohen normativen Anforderungen. Eine Herausforderung insbesondere an das Design der Hardwarekomponenten der DC-Versorgungsstation stellt der sogenannte Lastabwurf dar. Als Lastabwurf wird das schlagartige Beenden eines Ladevorgangs im Fehlerfall ohne vorherigen Informationsaustausch zwischen der DC-Versorgungsstation und dem elektrisch betreibbaren Fahrzeug bezeichnet.

Beim Lastabwurf steigt in Folge des Abbruchs des Ladevorgangs die Spannung an den Anschlusskontakten. Ursächlich hierfür ist der sehr schnelle Abfall des Ladestroms, der steuerungsseitig nur verzögert detektiert werden kann. Demzufolge wird auch die Leistungsabgabe erst verzögert beendet. Daher sehen DC-Versorgungsstationen heute sehr große Ausgangskondensatoren mit hoher Kapazität vor, über die der Spannungsanstieg während des Lastabwurfs begrenzt wird. Diese Ausgangskondensatoren sind jedoch teuer und beanspruchen einen erheblichen Bauraum. Darüber hinaus reduzieren sie durch ihre hohe Kapazität die Dynamik der Stromregelung im Normalbetrieb beziehungsweise verlangsamen diese.

Aufgabe der vorliegenden Erfindung ist es, eine DC-Versorgungsstation mit einer verbesserten Lastabwurferkennung sowie ein Betriebsverfahren hierfür bereitzustellen.

Zur Lösung der Aufgabe ist die Erfindung in Verbindung mit dem Oberbegriff des Patentanspruchs 1 dadurch gekennzeichnet, dass die Leistungselektronikbaugruppe eine Detektorschaltung aufweist, welche eingerichtet ist zur Erkennung eines Lastabwurfs, wobei die Detektorschaltung als Hardwareschaltung realisiert ist, wobei der Detektorschaltung eingangsseitig ein Messignal für den Ausgangsstrom bereitgestellt ist und ausgangsseitig eine Schaltleitung von der Detektorschaltung zu dem Gleichstromsteller geführt ist und wobei im Fall des Lastabwurfs über die Schaltleitung ein Abschaltsignal für das mindestens eine schaltbare Halbleiterbauelement des Gleichstromstellers bereitgestellt ist derart, dass die Leistungsabgabe durch den Gleichstromsteller unterbrochen wird.

Der besondere Vorteil der Erfindung besteht darin, dass der Lastabwurf sehr schnell hardwareseitig durch die Detektorschaltung erkannt wird und unmittelbar zur Abschaltung der Halbleiterbauelemente des Gleichstromstellers und zur Unterbrechung der Leistungsabgabe führt. Insofern gelingt es der Erfindung, den Anstieg der Ausgangsspannung zu begrenzen mit der Folge, dass der Ausgangskondensator signifikant kleiner dimensioniert werden kann als heute üblich und damit weniger Bauraum beansprucht und kostengünstiger ist.

Der Gleichstromsteller stellt ausgangsseitig einen Gleichstrom bereit. Beispielsweise ist er als ein DC-DC-Wandler realisiert.

Nach einer Weiterbildung der Erfindung sieht die als Hardwareschaltung realisierte Detektorschaltung einen Differenzierer oder einen auf die Charakteristik des Lastabwurfs ausgelegten Hochpassfilter für das Messsignal des Ausgangsstroms vor und führt insofern eine hardwarebasierte Stromänderungserkennung (di/dt-Erkennung) durch, um den Lastabwurf gleichermaßen sicher und schnell zu erkennen. Die Detektorschaltung schaltet dann das mindestens eine Halbleiterbauelement des Gleichstromstellers unmittelbar ab und unterbricht so den Leistungsfluss in Richtung des elektrisch betreibbaren Fahrzeugs direkt. Eine derartige hardwareseitige Unterbrechung der Leistungsabgabe ist wesentlich schneller als heutige Lösungen, die insbesondere auf einer steuerungsseitigen Erkennung des Lastabwurfs und der nachgelagerten Unterbrechung des Leistungsflusses basieren.

Die Erprobung der hier vorgeschlagenen Lastabwurferkennung für die DC-Versorgungsstation hat gezeigt, dass der Anstieg der Spannung im Ausgangskondensator auf weniger als 10 % begrenzt werden kann. Bei einer nominellen Ausgangsspannung von 400V wurde im Falle des Lastabwurfs eine maximale Spannung am Ausgangskondensator von etwa 430V ermittelt.

Nach einer bevorzugten Ausführungsform der Erfindung ist der Hochpassfilter der Detektorschaltung so ausgelegt, dass er bei einer Ausgangsstromänderung von 2000A/sec oder mehr durchlässig ist. Ein Abfall des Ausgangsstroms von wenigstens 2000A/sec oder mehr führt demzufolge dazu, dass über die Schaltleitung das Abschaltsignal für die schaltbaren Halbleiterbauelemente des Gleichstromstellers bereitgestellt ist. Als schaltbare Halbleiterbauelemente können beispielsweise MOSFETs, IGBTs oder Bipolartransistoren dienen.

Nach einer Weiterbildung der Erfindung ist im Hochpassfilter der Detektorschaltung ein Tiefpassfilter vorausgeschaltet. Der Tiefpassfilter ist so ausgelegt, dass er Störsignale im höheren MHz-Bereich herausfiltert. Die zur Erkennung des Lastabfalls genutzten Messsignale für den Ausgangsstrom passieren den Tiefpassfilter demgegenüber ungehindert.

Nach einer Weiterbildung der Erfindung erfolgt die Messung des Ausgangsstroms berührungslos. Das Messsignal für den Ausgangsstrom wird bevorzugt über eine Signalleitung zu der Detektorschaltung geführt.

Nach einer Weiterbildung der Erfindung ist zwischen dem Ausgangskondensator und den Anschlusskontakten der DC-Versorgungsstation ein Unterbrecher vorgesehen, der eingerichtet ist zum Trennen des ersten Versorgungsleiters und/oder des zweiten Versorgungsleiters. Der Unterbrecher ist beispielsweise als ein schaltbarer Unterbrecher und/oder als eine Leitungssicherung ausgebildet. Als schaltbarer Unterbrecher kann beispielsweise ein schaltbares Halbleiterbauelement, ein Relais oder ein Schütz vorgesehen sein.

Nach einer Weiterbildung der Erfindung kann der Unterbrecher als ein Not-Aus-Schalter dienen. Wenn beispielsweise im Fehlerfall eine reguläre Beendigung des Ladevorgangs nicht gelingt, weil beispielsweise ein Schütz klebt, kann der Unterbrecher notfallmäßig geöffnet werden. Die Detektorschaltung wird dann den Lastabfall erkennen und die Leistungsabgabe durch den Gleichstromsteller unterbrechen.

Zur Lösung der Aufgabe weist die Erfindung die Merkmale des Patentanspruchs 11 auf. Demzufolge umfasst ein Betriebsverfahren für eine DC-Versorgungsstation, die einen Gleichstromsteller mit mindestens einem schaltbaren Halbleiterbauelement, einen ersten und einen zweiten Anschlusskontakt, einen ersten und einen zweiten Versorgungsleiter sowie einen Ausgangskondensator vorsieht und bei der die Versorgungsleiter den Gleichstromsteller ausgangsseitig mit den Anschlusskontakten verbinden und die Versorgungsleiter über den Ausgangskondensator miteinander verbunden sind, die folgenden Schritte:
- über die Anschlusskontakte wird ein elektrisch betreibbares Fahrzeug mit einer Hochvoltbatterie an die DC-Versorgungsstation angeschlossen;
- eine Lastabgabe an das elektrisch betreibbare Fahrzeug erfolgt, indem über die Anschlusskontakte ein Ausgangsstrom zum Laden der Hochvoltbatterie bereitgestellt wird;
- der Ladevorgang wird plötzlich unterbrochen, so dass es zu einem Lastabwurf kommt und der über die Anschlusskontakte bereitgestellte Ausgangsstrom sehr schnell abfällt und die Spannung im Ausgangskondensator steigt;
- ein Messsignal für den Ausgangsstrom wird einer hardwarebasierten Detektorschaltung zugeführt zur Erkennung des Lastabwurfs;
- die Lastabgabe durch den Gleichstromsteller wird dann unterbrochen, indem das mindestens eine Halbleiterbauelement des Gleichstromstellers über ein von der Detektorschaltung bereitgestelltes Abschaltsignal abgeschaltet werden.

Der besondere Vorteil der Erfindung besteht darin, dass durch das erfindungsgemäße Betriebsverfahren der Lastabfall besonders schnell erkannt und die Lastabgabe durch den Gleichstromsteller so schnell unterbrochen werden kann, dass der Anstieg der Spannung im Ausgangskondensator auf weniger als 20 % und typischerweise auf weniger als 10 % begrenzt werden kann. Das Messsignal für den Ausgangsstrom wird dabei über eine Hardwareschaltung ausgewertet und es wird am Ausgang der Hardwareschaltung das Abschaltsignal für die Halbleiterbauelemente des Gleichstromstellers bereitgestellt. Die Hardwareschaltung ist hierbei deutlich schneller als eine softwarebasierte Erkennung des Lastabfalls über die Steuerung der DC-Versorgungsstation. Demzufolge kann der Spannungsanstieg im Ausgangskondensator stärker begrenzt werden als bei den bekannten Lösungen und der Ausgangskondensator kann eine geringere Kapazität besitzen als heute üblicherweise verwendete Ausgangskondensatoren. In der Folge sinken die Kosten und der Bauraumbedarf für den Ausgangskondensator reduziert sich.

Nach einer Weiterbildung der Erfindung wird in einem Notbetriebszustand beziehungsweise Fehlerfall der DC-Versorgungsstation der Lastabwurf erzwungen, indem ein Unterbrecher, der dem ersten Versorgungsleiter und/oder dem zweiten Versorgungsleiter zugeordnet ist, aktiv geöffnet wird. Durch das Öffnen des Unterbrechers, welcher beispielsweise als Relais, Schütz oder Halbleiterschaltelement ausgeführt sein kann, fällt der Ausgangsstrom unmittelbar ab. Die Detektorschaltung erkennt den Lastabfall und unterbricht die Leistungsabgabe durch den Gleichstromsteller.

Als elektrisch betreibbare Fahrzeuge im Sinne der Erfindung gelten insbesondere alle Automobile (Pkw, Lkw, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die elektrische Energie kann für Fahrzeuge mit und ohne eigenen Energiespeicher zur Verfügung gestellt werden.

Eine DC-Versorgungsstation im Sinne der Erfindung dient der Bereitstellung elektrischer Energie für elektrisch betreibbare Fahrzeuge im öffentlichen oder privaten Bereich. Darüber hinaus kann vorgesehen sein, dass die DC-Versorgungsstation genutzt wird, um im Rahmen eines übergeordneten Energie- und/oder Lastmanagements Energie aus einem Energiespeicher des an die DC-Versorgungsstation angeschlossenen elektrisch betreibbaren Fahrzeugs in das Versorgungsnetz ein- beziehungsweise zurückzuspeisen. Auf diese Weise können Spitzenbedarfe abgedeckt und das Versorgungsnetz stabilisiert werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der DC-Versorgungsstation gelten selbstverständlich auch im Zusammenhang mit dem erfindungsgemäßen Betriebsverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung. Sie haben keinen einschränkenden Charakter.

Es zeigen:
- Fig. 1: eine Prinzipdarstellung einer Ladeinfrastrukturanordnung umfassend eine DC-Versorgungsstation mit einer Detektorschaltung in einer ersten Betriebskonfiguration (Normalbetrieb),
- Fig. 2: die Ladeinfrastrukturanordnung nach Fig. 1 mit der Detektorschaltung in einer zweiten Betriebskonfiguration (Notbetriebszustand beziehungsweise Fehlerfall) und
- Fig. 3: ein Blockschaltbild der Detektorschaltung.

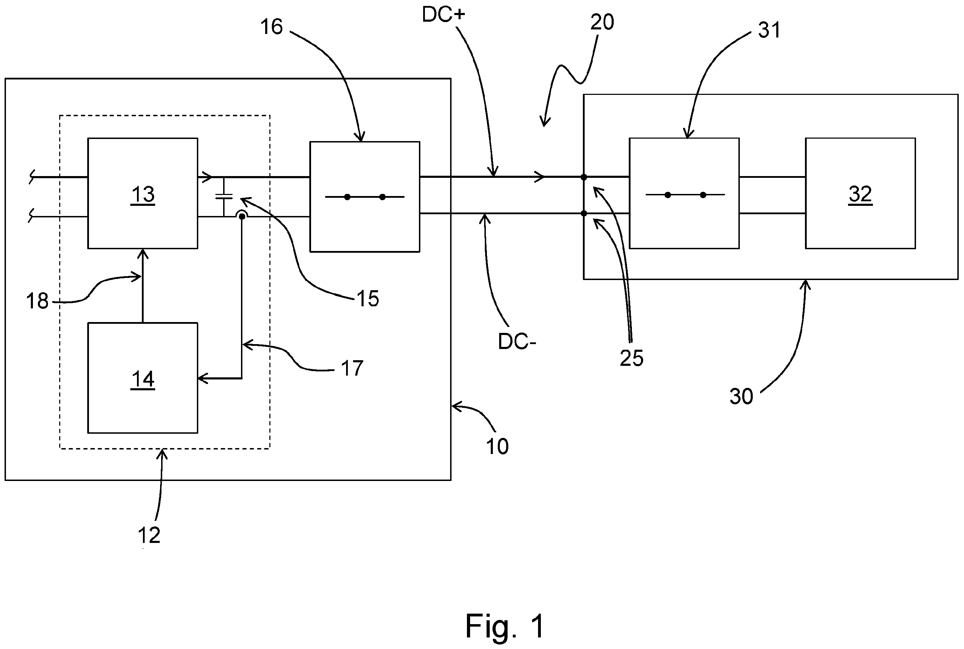

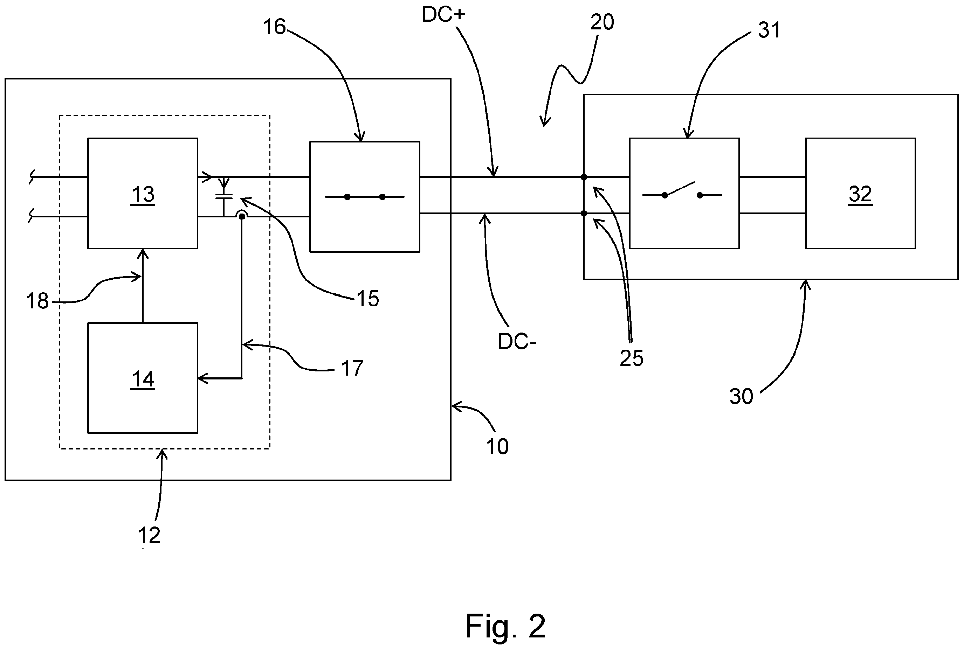

Die Fig. 1 und 2 zeigen eine Ladeinfrastrukturanordnung, die eine DC-Versorgungsstation 10 sowie ein an die DC-Versorgungsstation 10 angeschlossenes elektrisch betreibbares Fahrzeug 30 umfasst. In Fig. 1 ist eine erste Betriebskonfiguration der Ladeinfrastrukturanordnung dargestellt, bei der eine Hochvoltbatterie 32 des elektrisch betreibbaren Fahrzeugs 30 geladen wird. In einer zweiten Betriebskonfiguration der gleichen Ladeinfrastrukturanordnung gemäß Fig. 2 ist der Ladevorgang nach einem Lastabwurf abgebrochen.

Die DC-Versorgungsstation 10 sieht als erfindungswesentliche Funktionskomponenten unter anderem einen Gleichstromsteller 13 sowie eine Detektorschaltung 14 vor, die beide als Teil einer Leistungselektronikbaugruppe 12 realisiert und über eine Schaltleitung 18 miteinander verbunden sind. Der Gleichstromsteller 13 ist eingangsseitig an ein nicht näher dargestelltes Versorgungsnetz angeschlossen. Ausgangsseitig ist der Gleichstromsteller 13 über einen ersten Versorgungsleiter DC+ und einen zweiten Versorgungsleiter DC- mit einem ersten Anschlusskontakt und einem zweiten Anschlusskontakt der DC-Versorgungsstation 10 verbunden. Beispielsweise ist der Gleichstromsteller 13 als ein DC-DC-Wandler ausgebildet.

Die Anschlusskontakte sind Komponenten eines Fahrzeuganschlusses 25, der dem Anschluss des elektrisch betreibbaren Fahrzeugs 30 an die DC-Versorgungsstation 10 dient. Der Fahrzeuganschluss 25 weist insofern beispielsweise ein die Anschlusskontakte vorsehendes Steckelement sowie ein dem elektrisch betreibbaren Fahrzeug 30 zugeordnetes Gegensteckelement auf, in das das Steckelement mit den Anschlusskontakten eingesetzt werden kann. Das Steckelement mit den Anschlusskontakten ist vorliegend an einem freien Ende eines angeschlagenen Ladekabels 20 der DC-Versorgungsstation 10 vorgesehen.

Der Gleichstromsteller 13 sieht ein schaltbares Halbleiterbauelement oder eine Mehrzahl von schaltbaren Halbleiterbauelementen vor. Beispielsweise können MOSFETs, IGBTs oder Bipolartransistoren als schaltbare Halbleiterbauelemente des Gleichstromstellers 13 dienen.

In der ersten Betriebskonfiguration der DC-Versorgungsstation 10 wird ausgangsseitig über die Versorgungsleiter DC+, DC- ein in den Fig. 1 und 2 durch Pfeile kenntlich gemachter Lade- beziehungsweise Ausgangsstrom zum Laden der Hochvoltbatterie 32 des elektrisch betreibbaren Fahrzeugs 30 bereitgestellt. Der Ausgangsstrom wird seitens einer nicht dargestellten Steuerung der DC-Versorgungsstation 10 geregelt. Er folgt während des Ladens üblicherweise einem Vorgabewert, ist beispielsweise konstant oder wird moderat geändert. Plötzliche signifikante Änderungen des Ausgangsstroms treten in der ersten Betriebskonfiguration nicht auf.

Wird nun der Ladevorgang im Fehlerfall ohne vorherigen Informationsaustausch zwischen der DC-Versorgungsstation 10 und dem elektrisch betreibbaren Fahrzeug 30 abgebrochen, fällt der Ausgangsstrom sehr schnell ab. In der Praxis ist ein Stromabfall im Bereich von 2000A/sec oder mehr üblich. Der ausgangsseitig an den Gleichstromsteller 13 weiter bereitgestellte Strom fließt in der Folge in einen zwischen den Versorgungsleitern DC+, DC- vorgesehenen Ausgangskondensator 15 der DC-Versorgungsstation 10 und die Ausgangsspannung steigt.

Der Abfall des Ausgangsstroms ist auch in dem Messsignal für den Ausgangsstrom erkennbar, welches bei einer berührungslosen Strommessung ermittelt und über eine Signalleitung 17 der Detektorschaltung 14 zugeführt wird.

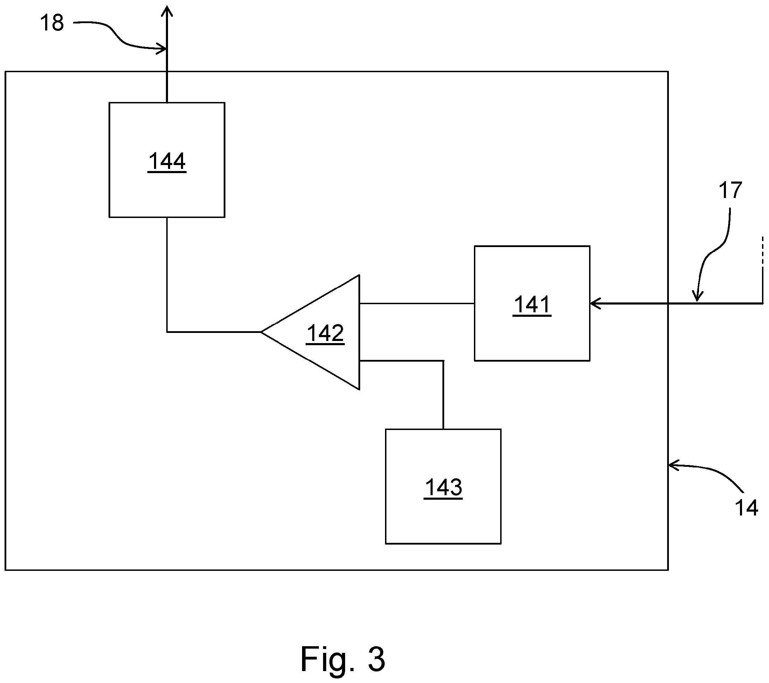

Die Detektorschaltung 14 der DC-Versorgungsstation 10 ist als Hardwareschaltung aufgebaut. Sie sieht gemäß Fig. 3 einen Hochpassfilter 141, ein Vergleicherglied 142, einen Referenzwertgeber 143 sowie ein Signalspeicherglied 144 vor. Der Hochpassfilter 141 lässt ausschließlich hochfrequente Eingangssignale durch und führt diese als Ausgangssignal dem Vergleicherglied 142 zu. Das Vergleicherglied 142 vergleicht das Ausgangssignal mit einem Referenzwert, der vom Referenzwertgeber 143 bereitgestellt wird. Überschreitet das Eingangssignal den Referenzwert, wird das Signalspeicherglied 144 betätigt und über die Schaltleitung 18 ein Abschaltsignal bereitgestellt. Über das Abschaltsignal, das dem Gleichstromsteller 13 zugeführt wird, werden die schaltbaren Halbleiterbauelemente des Gleichstromstellers 13 abgeschaltet.

Über das Abschaltsignal, welches über die Schaltleitung 18 zu dem Gleichstromsteller 13 geführt wird und die Halbleiterbauelemente desselben abschaltet, wird der Leistungsfluss unmittelbar nach dem Lastabwurf unterbrochen und der ausgangsseitige Spannungsanstieg begrenzt. Die als Hardwareschaltung realisierte Detektorschaltung 14 ist insofern sehr schnell und in der Lage, den Spannungsanstieg im Ausgangskondensator 15 auf weniger als 10 % der nominellen Ausgangsspannung zu begrenzen.

Die spezielle Konfiguration der Ladeinfrastrukturanordnung nach den Fig. 1 und 2 sieht vor, dass sowohl ausgangsseitig die DC-Versorgungsstation 10 als auch das elektrisch betreibbare Fahrzeug 30 jeweils einen Unterbrecher 16, 31 vorsehen. Als Unterbrecher 16, 31 können beispielsweise eine Leitungssicherung, ein weiteres schaltbares Halbleiterbauelement, ein Relais oder ein Schütz vorgesehen sein. Die Unterbrecher 16, 31 dienen der Unterbrechung der Versorgungsleiter DC+, DC-.

Die DC-Versorgungsstation 10 kann optional so ausgebildet sein, dass der ausgangsseitig des Gleichstromstellers 13 vorgesehene Unterbrecher 16 eine Not-Aus-Funktion realisiert. Sofern im Fehlerfall ein zu unterbrechender Ladevorgang mit den üblichen Mitteln nicht unterbrochen werden kann, können über den Unterbrecher 16 die Versorgungsleiter DC+, DC- geöffnet und das Laden der Hochvoltbatterie 32 des elektrisch betreibbaren Fahrzeugs 30 beendet werden. Die Detektorschaltung 14 erkennt in diesem Fall den Lastabwurf, schaltet die Halbleiterbauelemente des Gleichstromstellers 13 ab und unterbricht so die Leistungsabgabe durch den Gleichstromsteller 13.

Im vorliegenden Ausführungsbeispiel der Erfindung ist das Ladekabel 20 exemplarisch als ein angeschlagenes Ladekabel 20 der DC-Versorgungsstation 10 realisiert. Nach einem alternativen Ausführungsbeispiel der Erfindung kann das Ladekabel 20 als externes Ladekabel realisiert sein. Insofern sieht das Ladekabel 20 beidseitig Steckelemente vor, die zum Anschließen des elektrisch betreibbaren Fahrzeugs 30 an die DC-Versorgungsstation 10 in korrespondierend gestaltete Gegensteckelemente der Versorgungsstation 10 und des elektrisch betreibbaren Fahrzeugs 30 eingesetzt werden.

Statt des Hochpassfilters 141 kann beispielsweise ein Differenzierer vorgesehen werden zur Erkennung der Ausgangsstromänderung

Gleiche Bauteile und Bauteilfunktionen sind durch gleiche Bezugszeichen gekennzeichnet.

## Patentansprüche

1. DC-Versorgungsstation (10) für ein elektrisch betreibbares Fahrzeug (30) umfassend eine Leistungselektronikbaugruppe (12) mit einem Gleichstromsteller (13), wobei der Gleichstromsteller (13) mindestens ein schaltbares Halbleiterbauelement vorsieht und eingangsseitig an ein Versorgungsnetz angeschlossen ist, umfassend einen ersten Anschlusskontakt und einen zweiten Anschlusskontakt, wobei die Anschlusskontakte als Komponenten eines Fahrzeuganschlusses (25) dem Anschluss des elektrisch betreibbaren Fahrzeugs (30) an die DC-Versorgungsstation (10) dienen und über die Anschlusskontakte bei einer Leistungsabgabe an das elektrisch betreibbare Fahrzeug (30) ein Ausgangsstrom bereitstellbar ist, umfassend einen ersten Versorgungsleiter (DC+) und einen zweiten Versorgungsleiter (DC-), wobei die Versorgungsleiter (DC+, DC-) den Gleichstromsteller (13) ausgangsseitig mit den Anschlusskontakten verbinden, und umfassend einen Ausgangskondensator (15), wobei die Versorgungsleiter (DC+, DC-) über den Ausgangskondensator (15) miteinander verbunden sind, **dadurch gekennzeichnet, dass** die Leistungselektronikbaugruppe (12) eine Detektorschaltung (14) aufweist, welche eingerichtet ist zur Erkennung eines Lastabwurfs, wobei die Detektorschaltung (14) als Hardwareschaltung realisiert ist, wobei der Detektorschaltung (14) eingangsseitig ein Messignal für den Ausgangsstrom bereitgestellt ist und ausgangseitig eine Schaltleitung (18) zu dem Gleichstromsteller (13) geführt ist und wobei im Fall des Lastabwurf über die Schaltleitung (18) ein Abschaltsignal für das mindestens eine schaltbare Halbleiterbauelement des Gleichstromstellers (13) bereitgestellt ist derart, dass die Leistungsabgabe durch den Gleichstromsteller (13) unterbrochen wird.

2. DC-Versorgungsstation (10) nach Anspruch 1, **dadurch gekennzeichnet, dass** der Gleichstromsteller einen Hochpassfilter (141) und/oder einen Differenzierer vorsieht.

3. DC-Versorgungsstation (10) nach Anspruch 2, **dadurch gekennzeichnet, dass** der Hochpassfilter (141) durchlässig ist bei einer Ausgangsstromänderung von 2000 A/sec oder mehr.

4. DC-Versorgungsstation (10) nach einem der Ansprüche 1 bis 3, **dadurch gekennzeichnet, dass** Mittel zur berührungslosen Messung des Ausgangsstroms vorgesehen sind und/oder dass das Messsignal für den Ausgangsstrom über eine Signalleitung (17) zu der Detektorschaltung (14) geführt ist.

5. DC-Versorgungsstation (10) nach einem der Ansprüche 1 bis 4, **dadurch gekennzeichnet, dass** der Gleichstromsteller (13) mindestens ein MOSFET und/oder IGBT oder Bipolartransistor als schaltbares Halbleiterbauelement vorsieht.

6. DC-Versorgungsstation (10) nach einem der Ansprüche 1 bis 5, **dadurch gekennzeichnet, dass** dem Hochpassfilter (141) der Detektorschaltung (14) ein Tiefpassfilter vorgeschaltet ist.

7. DC-Versorgungsstation (10) nach einem der Ansprüche 1 bis 6, **dadurch gekennzeichnet, dass** zwischen dem Ausgangskondensator (15) und den Anschlusskontakten ein Unterbrecher (16) vorgesehen ist, wobei der Unterbrecher (16) eingerichtet ist zum Trennen des ersten Versorgungsleiters (DC+) und/oder des zweiten Versorgungsleiters (DC-).

8. DC-Versorgungsstation (10) nach Anspruch 7, **dadurch gekennzeichnet, dass** der Unterbrecher (16) als ein schaltbarer Unterbrecher ausgebildet ist und/oder als Not-Aus-Schalter dient.

9. DC-Versorgungsstation (10) nach Anspruch 7 oder 8, **dadurch gekennzeichnet, dass** eine Leitungssicherung und/oder ein weiteres schaltbares Halbleiterbauelement und/oder ein Relais und/oder ein Schütz und/oder ein Schalter als Unterbrecher (16) vorgesehen ist.

10. DC-Versorgungsstation (10) nach einem der Ansprüche 1 bis 9, **dadurch gekennzeichnet, dass** ein mit einem Gegensteckelement des elektrisch betreibbaren Fahrzeugs (30) verbindbares Steckelement, welches an einem freien Ende eines angeschlagenen Ladekabels (20) vorgesehen ist, die Anschlusskontakte bereitstellt.

11. Betriebsverfahren für eine DC-Versorgungsstation (10), insbesondere für eine DC-Versorgungsstation (10) nach einem der Ansprüche 1 bis 10, wobei die DC-Versorgungsstation (10) einen Gleichstromsteller (13) mit mindestens einem schaltbaren Halbleiterbauelement, einen ersten und einen zweiten Anschlusskontakt, einen ersten und einen zweiten Versorgungsleiter (DC+, DC-) sowie einen Ausgangskondensator (15) vorsieht, wobei die Versorgungsleiter (DC+, DC-) den Gleichstromsteller (13) ausgangsseitig mit den Anschlusskontakten verbinden und die Versorgungsleiter (DC+, DC-) über den Ausgangskondensator (15) miteinander verbunden sind, umfassend die folgenden Schritte:
- über die Anschlusskontakte wird ein elektrisch betreibbares Fahrzeug (30) mit einer Hochvoltbatterie (32) an die DC-Versorgungsstation (10) angeschlossen;
- eine Lastabgabe an das elektrisch betreibbare Fahrzeug (30) erfolgt, indem über die Anschlusskontakte ein Ausgangsstrom zum Laden der Hochvoltbatterie (32) bereitgestellt wird;
- der Ladevorgang wird plötzlich unterbrochen, so dass es zu einem Lastabwurf kommt und der über die Anschlusskontakte bereitgestellte Ausgangsstrom sehr schnell abfällt und die Spannung im Ausgangskondensator (15) steigt;
- ein Messsignal für den Ausgangsstrom wird einer hardwarebasierten Detektorschaltung (14) zugeführt zur Erkennung des Lastabwurfs;
- die Lastabgabe durch den Gleichstromsteller (13) wird dann unterbrochen, indem das mindestens eine Halbleiterbauelement des Gleichstromstellers (13) über ein von der Detektorschaltung (14) bereitgestelltes Abschaltsignal abgeschaltet werden.

12. Betriebsverfahren nach Anspruch 11, **dadurch gekennzeichnet, dass** die Hardwarekomponenten der Detektorschaltung (14) und das mindestens eine schaltbare Halbleiterbauelement des Gleichstromstellers (13) so ausgelegt sind, dass die Spannung in dem Ausgangskondensator (15) im Fall des Lastabwurfs um maximal 20 % und bevorzugt um 10 % oder weniger ansteigt.

13. Betriebsverfahren nach Anspruch 11 oder 12, **dadurch gekennzeichnet, dass** Störsignale aus dem Messsignal für den Ausgangsstrom herausgefiltert werden, bevor es einem Differenzierer und/oder einem Hochpassfilter (141) der Detektorschaltung (14) zugeführt wird.

14. Betriebsverfahren nach einem der Ansprüche 11 bis 13, **dadurch gekennzeichnet, dass** der Ausgangsstrom berührungslos gemessen wird.

15. Betriebsverfahren nach einem der Ansprüche 11 bis 14, **dadurch gekennzeichnet, dass** der Lastabwurf in einem Notbetriebszustand der DC-Versorgungsstation (10) erzwungen wird, indem ein Unterbrecher (16), der dem ersten Versorgungsleiter (DC+) und/oder dem zweiten Versorgungsleiter (DC-) zugeordnet ist, aktiv geöffnet wird.
